# EUROPEAN PATENT APPLICATION

(11) **EP 4 424 165 A1**
(43) Date of publication of application: **04.09.2024**
(21) Application number: 22886854.3
(22) Date of filing: 20.10.2022
(51) Int. Cl.: A01N 35/02, A01P 21/00, A01G 7/06, A01N 25/08

(54) **HEAT TOLERANCE-INDUCING AGENT FOR PLANTS AND METHOD FOR INDUCING HEAT TOLERANCE OF PLANTS**

(30) Priority: 26.10.2021 JP 2021174292
(71) Applicant: AGC INC., Chiyoda-ku, Tokyo 1008405 (JP)
(72) Inventor: EGUCHI Hajime, Tokyo 100-8405 (JP); KOGUCHI Ryohei, Tokyo 100-8405 (JP); MIYAJIMA Tatsuya, Tokyo 100-8405 (JP)
(74) Representative: Müller-Boré & Partner Patentanwälte PartG mbB
(86) International application number: PCT/JP2022/039113
(87) International publication number: WO 2023/074526

(57) **Abstract**

This heat tolerance-inducing agent for plants comprises a carrier composed of an active ingredient including at least one compound having a boiling point or sublimation point of 200°C or lower supported on a porous material. The method for inducing heat tolerance of plants includes applying this heat tolerance-inducing agent to a plant.

## Description

### [Technical Field]

The present invention relates to a heat tolerance-inducing agent for plants and a method for inducing heat tolerance of plants.

Priority is claimed on Japanese Patent Application No. 2021-174292, filed October 26, 2021, the content of which is incorporated herein by reference.

### [Background Art]

When plants for agriculture and horticulture are exposed to high temperatures, damage caused by the high temperatures causes a deterioration in the quality and yield of the agricultural and horticultural plants. Conventionally, in order to prevent damage caused by the high temperatures, sunshade installations or ventilation installations in greenhouses have been employed, but these countermeasures require significant cost and cannot be easily implemented.

Accordingly, application of a heat tolerance-inducing agent to plants has been investigated as a countermeasure that can be easily implemented in many agricultural settings. Examples of known heat tolerance-inducing agents include unsaturated carbonyl compounds such as hydroxyacrolein, ethyl vinyl ketone and 2-hexenal (Patent Document 1). Further, a product prepared by supporting 2-hexenal on a sublimable carrier of 2,4,6-triisopropyl-1,3,5-trioxane and then tableting the supported product is already commercially available.

### [Citation List]

### [Patent Documents]

[Patent Document 1]
Japanese Unexamined Patent Application, First Publication No. 2011-157307

### [Summary of Invention]

### [Technical Problem]

However, investigations by the inventors of the present invention revealed that in those cases where a heat tolerance-inducing agent has a boiling point or sublimation point of 200°C or lower, the agent rapidly vaporizes following application, meaning the duration of the effect may sometimes be quite short. If the duration of the effect is short, then the heat tolerance-inducing agent must be applied frequently, increasing the amount of labor and cost. When 2-hexenal is supported on a sublimable carrier, although the duration of the effect lengthens, that lengthening effect is still inadequate.

The present invention provides a heat tolerance-inducing agent for plants that exhibits excellent duration of effect, and a method for inducing heat tolerance of plants.

### [Solution to Problem]

The present invention has the following aspects.
[1] A heat tolerance-inducing agent for plants, containing a carrier composed of an active ingredient including at least one compound having a boiling point or sublimation point of 200°C or lower supported on a porous material.
[2] The heat tolerance-inducing agent according to [1], wherein the porous material contains silica.
[3] The heat tolerance-inducing agent according to [2], wherein the silica is at least one material selected from the group consisting of porous silica, zeolite and montmorillonite.
[4] The heat tolerance-inducing agent according to [2], wherein the silica is a silica gel.
[5] The heat tolerance-inducing agent according to any one of [1] to [4], wherein an amount of the silica is within a range from 95 to 100% by mass relative to the total mass of the porous material.
[6] The heat tolerance-inducing agent according to any one of [1] to [5], wherein the specific surface area of the porous material is within a range from 100 to 1,000 m²/g.
[7] The heat tolerance-inducing agent according to any one of [1] to [6], wherein the compound is an unsaturated carbonyl compound.
[8] The heat tolerance-inducing agent according to any one of [1] to [6], wherein the compound is 2-hexenal.
[9] A method for inducing heat tolerance of plants, the method including applying the heat tolerance-inducing agent according to any one of [1] to [8] to a plant.

### [Advantageous Effects of Invention]

The heat tolerance-inducing agent for plants and the method for inducing heat tolerance of plants according to the present invention exhibit excellent duration of effect.

### [Description of Embodiments]

In the present invention, the terms "boiling point" and "sublimation point" both refer to values at normal pressure (one atmosphere).

Numerical ranges indicated using the expression "a to b" describe a range that includes the numerical values before and after the "to" as the minimum value and maximum value respectively.

The heat tolerance-inducing agent for plants according to one embodiment of the present invention contains a carrier composed of an active ingredient supported on a porous material.

### (Active Ingredient)

The active ingredient has an action that induces heat tolerance on plants.

The active ingredient in the present embodiment includes at least one compound (hereinafter also referred to as "compound A") having a boiling point or sublimation point of 200°C or lower. The compound A in the active ingredient may be a single compound or two or more compounds.

Because the compound A has a boiling point or sublimation point of 200°C or lower, the compound can vaporize (evaporate or sublimate) in a plant growth environment (for example, 0 to 50°C).

The boiling point or sublimation point of the compound A is preferably 175°C or lower, and even more preferably 150°C or lower. The lower the boiling point or sublimation point, the more readily the compound vaporizes following application, increasing the utility of the present invention.

In terms of the duration of effect, the boiling point or sublimation point of the compound A is preferably 80°C or higher, and moreover preferably 100°C or higher.

The compound A may be either a liquid or a solid at 25°C.

The compound A may be selected appropriately from among conventional compounds having a heat tolerance-inducing action on plants that also have a boiling point or sublimation point of 200°C or lower.

Examples of compounds having a heat tolerance-inducing action on plants include unsaturated carbonyl compounds such as unsaturated aldehydes and unsaturated ketones. Specific examples of unsaturated carbonyl compounds include the compounds disclosed in Japanese Unexamined Patent Application, First Publication No. 2011-157307 and International Patent Publication WO2016/031775.

The unsaturated carbonyl compound is preferably a compound represented by formula 1 shown below.

R¹-CH=CH-C(=O)-R² Formula 1

In the formula, R¹ represents a hydrogen atom, a hydroxyl group, or an alkyl group of 1 to 9 carbon atoms, and R² represents a hydrogen atom or an alkyl group of 1 to 5 carbon atoms.

The alkyl groups for R¹ and R² may each be either linear or branched.

Among the various compounds represented by formula 1, compounds in which R¹ represents a hydrogen atom or an alkyl group of 1 to 6 carbon atoms, R² represents a hydrogen atom or an alkyl group of 1 to 5 carbon atoms, and the total number of carbon atoms in R¹ and R² is 6 or fewer (meaning the total number of carbon atoms in the compound is 9 or fewer) are preferred.

Specific examples of unsaturated carbonyl compounds having a boiling point or sublimation point of 200°C or lower include 2-hexenal (boiling point: 146°C), 2-butenal (boiling point: 105°C), 2-pentenal (boiling point: 126 to 130°C), 2-heptenal (boiling point: 166°C), 1-penten-3-one (boiling point: 81°C), 3-penten-2-one (boiling point: 123°C), 4-hexen-3-one (boiling point: 137°C), 3-hepten-2-one (boiling point: 156°C), and 2-octen-4-one (boiling point: 178°C).

Other examples of compounds having a heat tolerance-inducing action on plants include branched-chain amino acids and intermediates in the biosynthetic pathways and consumption pathways of branched-chain amino acids (hereinafter these compounds are also jointly referred to as " branched-chain amino acids"). Specific examples of these branched-chain amino acids include the compounds disclosed in Japanese Unexamined Patent Application, First Publication No. 2012-197249.

Specific examples of branched-chain amino acids having a boiling point or sublimation point of 200°C or lower include leucine (sublimation point: 145 to 148°C) and α-ketoisovaleric acid (boiling point: 171°C).

The active ingredient may also include a compound having a heat tolerance-inducing action on plants other than the compound A, provided the effects of the present invention are not impaired.

There are no particular limitations on the proportion of the compound A relative to the total mass of the active ingredient, and the proportion may be, for example, 1% by mass or greater or 10% by mass or greater, and may be 100% by mass. Provided the proportion of the compound A falls within this range, a satisfactory action for inducing heat tolerance on plants can be achieved.

### (Porous Material)

The porous material is a carrier that supports the active ingredient.

The porous material may contain silica. In this description, the term "silica" means compounds containing silicon oxide. Examples of the silica include porous silica such as silica gel, diatomaceous earth and mesoporous silica, as well as zeolite, montmorillonite, boiling stones, porous glass, kaolinite, sericite, illite, glauconite, chlorite and talc. The silica is preferably at least one material selected from the group consisting of porous silica, zeolite and montmorillonite, is more preferably a porous silica, and is even more preferably a silica gel.

The porous material may also contain another component besides the silica. The amount of silica relative to the total mass of the porous material is preferably 50% by mass or greater, more preferably 80% by mass or greater, even more preferably 90% by mass or greater, still more preferably 95% by mass or greater, and may be 100% by mass. Provided the amount of the silica falls within this range, the sustained releasability and the stability of the active ingredient tend to be superior.

The specific surface area of the porous material is, for example, within a range from 1 to 3,000 m²/g, or from 100 to 1,000 m²/g. The specific surface area of the porous material is preferably within a range from 200 to 1,000 m²/g, and more preferably from 420 to 1,000 m²/g. Provided the specific surface area of the porous material is within the range from 1 to 3,000 m²/g, the retention rate of the compound A is high, and the duration of effect can be improved. If the specific surface area of the porous material is within the range from 420 to 1,000 m²/g, then the retention rate of the compound A is even higher, and the duration of effect can be further improved. The specific surface area is measured by the gas adsorption method. Specifically, the specific surface area is measured under ultra-low temperature conditions using a specific surface area measurement apparatus (product name: 3Flex, manufactured by Shimadzu Corporation) with a sample size of 100 mg.

The pore volume of the porous material is, for example, within a range from 0.01 to 10 mL/g, from 0.05 to 3 mL/g, or from 0.1 to 1.7 mL/g. The pore volume is measured by the Barrett-Joyner-Halenda (BJH) method. Specifically, the pore volume is measured under ultra-low temperature conditions using a pore volume distribution measurement apparatus (for example, 3Flex, manufactured by Shimadzu Corporation) with a sample size of 100 mg.

The pore diameter of the porous material is, for example, within a range from 0.5 to 1,000 nm, from 0.5 to 100 nm, or from 1 to 25 nm. The pore diameter is measured by the gas adsorption method. Specifically, the pore diameter is measured under ultra-low temperature conditions using a specific surface area measurement apparatus (for example, 3Flex, manufactured by Shimadzu Corporation) with a sample size of 100 mg.

The oil absorption of the porous material is, for example, within a range from 1 to 1,000 mL/100g, from 10 to 500 mL/100g, or from 40 to 300 mL/100g. The oil absorption is measured by the refined linseed oil method. Specifically, small amounts of the porous material and refined linseed oil are mixed together, and the amount of refined linseed oil used per 100 g of the porous material to achieve a state where a spatula can be used to wind the mixture into a spiral shape is measured and recorded as the oil absorption.

There are no particular limitations on the form of the porous material, and granular, block-like, film-like, pelletized and honeycomb-like materials may be used. In terms of ease of availability, a granular material is preferred. Examples of the shape of the granules include spherical shapes such as true spherical and elliptic spherical shapes, as well as needle-like, scale-like and amorphous shapes.

In those cases where the porous material is granular, the average particle diameter of the porous material is, for example, within a range from 0.1 to 1,000 µm, from 4 to 1,000 µm, or from 0.5 to 300 µm. The average particle diameter is measured using a Coulter counter (for example, a Multisizer 4e manufactured by Beckman Coulter, Inc.).

For the porous material, among the various forms of porous silica, a silica gel is preferred in terms of safety.

The average particle diameter of the silica gel is, for example, within a range from 0.5 to 300 µm, or from 4 to 70 µm. The average particle diameter of the silica gel refers to the 50% cumulative volume particle size when measurement is conducted under solution conditions using a particle size distribution analyzer (Multisizer 4e manufactured by Beckman Coulter, Inc.).

The specific surface area of the silica gel is, for example, within a range from 30 to 1,000 m²/g, from 100 to 1,000 m²/g, from 150 to 1,000 m²/g, from 200 to 1,000 m²/g, or from 420 to 1,000 m²/g.

The pore volume of the silica gel is, for example, within a range from 0.05 to 3 mL/g, from 0.2 to 2.5 mL/g, or from 0.5 to 1.7 mL/g.

The pore diameter of the silica gel is, for example, within a range from 0.5 to 100 nm, from 2 to 50 nm, or from 3 to 25 nm.

The oil absorption of the silica gel is, for example, within a range from 10 to 500 mL/100g, from 50 to 450 mL/100g, or from 100 to 300 mL/100g.

### (Carrier)

In the carrier, the support ratio for the active ingredient relative to the total mass of the carrier is, for example, within a range from 0.01 to 1,000% by mass, or from 0.1 to 10% by mass.

The support ratio for the active ingredient is determined by extracting the active ingredient from the carrier using a solvent capable of dissolving the active ingredient, and then analyzing the obtained extract solution by gas chromatography (for example, a 7890A apparatus manufactured by Agilent Technologies, Inc.).

### (Other Components)

If necessary, the heat tolerance-inducing agent may also contain one or more other components besides the active ingredient and the porous material, provided the effects of the present invention are not impaired.

In those cases where the heat tolerance-inducing agent contains another component, the other component may or may not be supported on the carrier.

Examples of other components include antioxidants, coupling agents and binders.

### (Method for Producing Heat Tolerance-Inducing Agent)

The heat tolerance-inducing agent can be obtained by supporting the active ingredient containing at least one compound A on the porous material.

There are no particular limitations on the support method, and conventional methods may be used as appropriate.

For example, the carrier may be obtained using a method in which the active ingredient is brought into contact with the porous material together with a liquid medium having a boiling point lower than the boiling point or sublimation point of the compound A, and the carrier is subsequently dried at a temperature lower than the boiling point or sublimation point of the compound A (to remove the liquid medium).

The liquid medium may be any medium capable of dissolving or dispersing the active ingredient. The amount used of the liquid medium is, for example, within a range from 10 to 10,000 parts by mass, or from 100 to 1,000 parts by mass, per 100 parts by mass of the carrier.

There are no particular limitations on the method used for bringing the active ingredient and the liquid medium into contact with the porous material, and conventional methods such as dipping or spraying may be used. The contact time may be any time sufficient to enable the active ingredient to satisfactorily impregnate the porous material, and may be set appropriately in accordance with factors such as the size and the material of the porous material.

In those cases where the active ingredient is a liquid, the carrier may also be obtained by a method in which only the active ingredient is brought into contact with the porous material.

If necessary, the obtained carrier may be shaped into an arbitrary form, together with any other components that may be added as required.

In those cases where the carrier is shaped into a desired form, there are no particular limitations on the form, and examples include tablets, fine particles, films and blocks. The shaping method may employ conventional methods.

If necessary, the obtained heat tolerance-inducing agent may be stored in a container used for applying the agent to plants.

Following application of the heat tolerance-inducing agent, the compound A vaporizes and diffuses through the air, and upon reaching the plant, induces heat tolerance. Accordingly, in order to enable the vaporized compound A to be discharged from the container, the container is preferably either gas permeable, or has one or more openings that connect the interior of the container to the exterior.

The container may also include a mounting member for mounting the container to the plant or an arbitrary support.

### (Use)

The heat tolerance-inducing agent is applied to a plant to induce heat tolerance for the plant. By applying the heat tolerance-inducing agent to the plant, heat tolerance of the plant can be induced.

Heat damage refers to adverse effects on the growth of the plant caused by high air temperatures.

Heat damage in agricultural and horticultural plants causes a deterioration in the quality and yield of the plants. Specific examples of heat damage include size reduction, unsatisfactory growth, inadequate sugar content, and short stalks in head-producing agricultural and horticultural plants, as well as malformation and poor flower color in flowers.

Examples of the plants to which the heat tolerance-inducing agent may be applied include any plant in which heat tolerance can be induced by the compound A, and there are no particular limitations. The plants to which the heat tolerance-inducing agent may be applied in an embodiment of the present invention are typically plants having stomata, and are preferably agricultural or horticultural plants. Specific examples of these plants (and particularly agricultural and horticultural plants) include grains (such as rice, barley, wheat, rye, oats and corn), beans (such as soybeans, adzuki beans, broad beans, peas and peanuts), fruit trees and fruits (such as apples, citrus fruits, pears, grapes, peaches, plums, cherries, walnuts, almonds, bananas and strawberries), vegetables (such as cabbages, tomatoes, eggplants, spinach, broccoli, lettuce, onions, spring onions and capsicums), root vegetables (such as carrots, potatoes, sweet potatoes, daikon and turnips), process crops (such as cotton, hemp, paper mulberry, paper bush, rapeseed, beets, hops, sugar cane, sugar beet, olives, rubber, coffee, tobacco and tea), cucurbits (such as pumpkins, cucumbers, watermelon and melons), grasses (such as orchard grass, sorghum, timothy crass, clover and alfalfa), lawn grasses (such as Japanese lawn grass and bent grass), flowers and ornamental plants (such as chrysanthemums, roses and orchids), and fragrance and flavoring crops (such as lavender, rosemary, thyme, parsley, pepper and ginger).

The method for inducing heat tolerance according to the present invention includes application of the heat tolerance-inducing agent according to the present invention to a plant. The method used for applying the heat tolerance-inducing agent to the plant may employ conventional methods. In one example method, a silica gel having the active ingredient supported thereon is placed in an gas-permeable bag and installed in the vicinity of the plant. In those cases where the heat tolerance-inducing agent is placed in an aforementioned container having an opening, the container may also be placed on the surface of the ground or the like near the plant. In those cases where the container has an aforementioned mounting member, the container may be mounted on the plant or an arbitrary support.

The amount applied of the heat tolerance-inducing agent may be set appropriately in accordance with the type of active ingredient, the temperature, the humidity, the air pressure, and the ideal concentration on the target plant. For example, in the case of 2-hexenal, the application amount may be adjusted so that the 2-hexenal concentration in the atmosphere is within a range from about 0.001 to 0.1 ppm.

### [Examples]

The present invention is described below in further detail based on a series of specific examples, but the present invention is not limited in any way by the content of the following examples. The units "%" indicate "% by mass".

Examples 1 to 10 and 13 represent examples of the present invention, and Examples 11, 12, 14 and 15 represent comparative examples.

### (Examples 1 to 10)

A porous material containing a silica with the characteristics shown in Table 1 was weighed into a 200 mL round-bottom flask in an amount within a range from 20 to 30 g, and 2-hexenal (the trans isomer) was added in an amount of 0.35% by mass relative to the mass of the porous material containing the silica. Subsequently, 100 g of dichloromethane was added, the mixture was stirred for one minute, and the dichloromethane was then removed by evaporation using a rotary evaporator, thus obtaining a powdered heat tolerance-inducing agent (carrier).

A sample of the obtained heat tolerance-inducing agent with a mass of 1.00 to 1.20 g was placed in a 20 mL vial, and the evaluations described below were conducted. The results are shown in Table 1.

### <Evaluation 1a: Measurement of 2-Hexenal Support Ratio>

First, 5 g of a mixed solvent of chloroform : methanol = 9:1 (volume ratio) was added to the vial containing the sample, and the mixture was stirred for one minute to extract the supported 2-hexenal. Hexadecane was then added as an internal standard, and the resulting mixture was filtered. The thus obtained filtrate (the extract solution containing the internal standard) was analyzed by gas chromatography, and the amount (mg) of supported 2-hexenal was calculated using a calibration curve prepared in advance using hexadecane as an internal standard. The support ratio (%) of 2-hexenal within 100% of the sample was determined from the calculated supported amount (mg) and the mass of the sample inside the vial.

### <Evaluation 1b: Measurement of 2-Hexenal Retention Rate>

The vial containing the sample was stored, without a lid attached, in an environment at either 23°C or 50°C for a period of 7 days. Following this storage period, the support ratio (%) of 2-hexenal was determined in the same manner as that described above in [Evaluation 1a].

Based on the measurement results, the 2-hexenal retention rates following storage at 23°C and at 50°C were each calculated using the formula below. In the formula, the [initial 2-hexenal content] represents the value determined in the above "Measurement of 2-Hexenal Support Ratio". 2-Hexenal retention rate (%) = 2-hexenal support ratio (%) after storage/initial 2-hexenal support ratio (%)×100

### (Example 11)

Commercially available tablets having 2-hexenal supported on 2,4,6-triisopropyl-1,3,5-trioxane (hereinafter referred to as simply "trioxane") were used as the heat tolerance-inducing agent of Example 11.

A sample of this heat tolerance-inducing agent was placed in a 20 mL vial, and the evaluations described below were conducted. The results are shown in Table 1.

### <Evaluation 2a: Measurement of 2-Hexenal Support Ratio>

With the exception that chloroform was added to the vial containing the sample to dissolve the sample, hexadecane was added to the resulting solution as an internal standard, and analysis was then conducted by gas chromatography (7890A apparatus manufactured by Agilent Technologies, Inc.), the support ratio (%) of 2-hexenal within 100% of the sample was determined in the same manner as that described above in [Evaluation 1a].

### <Evaluation 2b: Measurement of 2-Hexenal Retention Rate>

The vial containing the sample was stored in an environment at either 23°C or 50°C for a period of 7 days. Following this storage period, the support ratio (%) of 2-hexenal was determined in the same manner as that described above in [Evaluation 2a].

Based on the measurement result, the 2-hexenal retention rate (%) was determined in the same manner as that described above in [Evaluation 1b].

### (Example 12)

Example 12 used 2-hexenal alone as a heat tolerance-inducing agent.

A sample of this heat tolerance-inducing agent was placed in a 20 mL vial, and the evaluations described below were conducted. The results are shown in Table 1.

### <Evaluation 3b: Measurement of 2-Hexenal Retention Rate>

The vial containing the sample was stored in an environment at either 23°C or 50°C for a period of 7 days. Following this storage period, the sample mass (g) remaining in the vial was measured, and this value was deemed the 2-hexenal support ratio (%) after storage.

Based on the measurement result, the 2-hexenal retention rate (%) was determined in the same manner as that described above in [Evaluation 1b].

In Example 12, because 2-hexenal was used alone, the initial 2-hexenal support ratio was deemed to be 100%.

**[Table 1]**

| | Carrier | | | | | | 2-hexenal support ratio (%) | 2-hexenal support amount (mg) | | | | 2-hexenal retention rate (%) | |
|---|---|---|---|---|---|---|---|---|---|---|---|---|---|
| | Name of material | Average particle diameter (µm) | Specific surface area (m²/g) | Pore volume (ml/g) | Pore diameter (nm) | Oil absorption (mJ/100g) | | Storage at 23°C | | Storage at 50°C | | | |
| | | | | | | | | Initial | After 7 days | Initial | After 7 days | 23°C | 50°C |
| Example 1 | Silica gel | 45 | 680 | 0.9 | 5 | 150 | 0.316 | 3.52 | 3.43 | 3.39 | 2.79 | 97 | 82 |
| Example 2 | | 18 | 860 | 1.0 | 5 | 150 | 0.299 | 3.20 | 3.20 | 3.17 | 2.89 | 100 | 91 |
| Example 3 | | 12 | 790 | 0.8 | 5 | 150 | 0.308 | 3.37 | 3.37 | 3.43 | 2.95 | 100 | 86 |
| Example 4 | | 4.9 | 300 | 0.8 | 13 | 150 | 0.320 | 3.66 | 3.49 | 3.48 | 2.86 | 95 | 82 |
| Example 5 | | 19 | 120 | 0.1 | <1 | 40 | 0.323 | 3.58 | 3.21 | 3.67 | 1.29 | 90 | 35 |
| Example 6 | | 4.5 | 200 | 1.5 | 25 | 300 | 0.347 | 3.16 | 2.91 | 3.31 | 2.72 | 92 | 82 |
| Example 7 | | 70 | 420 | 1.7 | 16 | 300 | 0.357 | 3.69 | 3.54 | 3.78 | 3.25 | 96 | 86 |
| Example 8 | | 15 | 1,000 | 0.5 | 3 | 100 | 0.292 | 1.19 | 1.19 | 1.32 | 1.27 | 100 | 96 |
| Example 9 | Montmorillonite | 5.4 | 260 | 0.5 | 7 | 100 | 0.331 | 3.14 | 1.62 | 3.17 | 0.82 | 52 | 26 |
| Example 10 | Zeolite | 1,000 | 510 | 0.1 | 1 | 60 | 0.306 | 2.94 | 0.79 | 2.86 | 0.39 | 27 | 14 |
| Example 11 | Trioxane | - | - | - | - | - | 0.336 | 23.8 | 3.56 | 23.5 | 0 | 15 | 0 |
| Example 12 | No carrier | - | - | - | - | - | 100 | 13.0 | 0 | 12.5 | 0 | 0 | 0 |

### (Example 13)

With the exception of using 3-hepten-2-one instead of 2-hexenal as the active ingredient, evaluations were conducted in the same manner as Example 1. The results are shown in Table 2.

### (Example 14)

An agent prepared by mixing trioxane and 3-hepten-2-one (in a mass ratio of 100:0.35) and then freeze drying the mixture was used as a heat tolerance-inducing agent, and evaluations were conducted in the same manner as Example 11. The results are shown in Table 2.

### (Example 15)

Example 15 used 3-hepten-2-one alone as a heat tolerance-inducing agent. Evaluations were conducted in the same manner as Example 12. The results are shown in Table 2.

**[Table 2]**

| | Carrier | | | | | | 3-hepten-2-one support ratio (%) | 3-hepten-2-one support amount (mg) | | | | 3-hepten-2-one retention rate (%) | |
|---|---|---|---|---|---|---|---|---|---|---|---|---|---|
| | Name of material | Average particle diameter (µm) | Specific surface area (m²/g) | Pore volume (ml/g) | Pore diameter (nm) | Oil absorption (mJ/100g) | | Storage at 23°C | | Storage at 50°C | | | |
| | | | | | | | | Initial | After 7 days | Initial | After 7 days | 23°C | 50°C |
| Example 13 | Silica gel | 45 | 680 | 0.9 | 5 | 150 | 0.333 | 3.74 | 3.67 | 3.57 | 3.39 | 98 | 95 |
| Example 14 | Trioxane | - | - | - | - | - | 0.312 | 20.5 | 6.36 | 21.2 | 0 | 31 | 0 |
| Example 15 | No carrier | - | - | - | - | - | 100 | 11.5 | 0 | 10.7 | 0 | 0 | 0 |

In the case of the heat tolerance-inducing agents of Examples 12 and 15 which used no carrier, no residual active ingredient was retained after 7 days storage at either 23°C or 50°C.

The heat tolerance-inducing agents of Examples 11 and 14 which used trioxane as a carrier retained a small amount of residual 2-hexenal after storage for 7 days at 23°C, but displayed no residual active ingredient after 7 days storage at 50°C.

In contrast, in the case of the heat tolerance-inducing agents of Examples 1 to 10 and Example 13, the 2-hexenal was retained after 7 days storage at either 23°C or 50°C. Further, the retention rate in the case of storage at 23°C was much higher than that observed in Examples 11 and 14.

### [Industrial Applicability]

The heat tolerance-inducing agent for plants according to the present invention exhibits excellent duration of effect. Accordingly, by placing the heat tolerance-inducing agent in a container having an opening, and then either installing the container on the surface of the ground or the like near a plant having stomata, or mounting the container onto the plant or an arbitrary support, any deterioration in the quality and yield of the plant can be suppressed.

## Claims

1. A heat tolerance-inducing agent for plants, comprising a carrier composed of an active ingredient including at least one compound having a boiling point or sublimation point of 200°C or lower supported on a porous material.

2. The heat tolerance-inducing agent according to Claim 1, wherein the porous material comprises silica.

3. The heat tolerance-inducing agent according to Claim 2, wherein the silica is at least one material selected from the group consisting of porous silica, zeolite and montmorillonite.

4. The heat tolerance-inducing agent according to Claim 2, wherein the silica is a silica gel.

5. The heat tolerance-inducing agent according to any one of Claims 2 to 4, wherein an amount of the silica is within a range from 95 to 100% by mass relative to a total mass of the porous material.

6. The heat tolerance-inducing agent according to any one of Claims 1 to 5, wherein a specific surface area of the porous material is within a range from 100 to 1,000 m²/g.

7. The heat tolerance-inducing agent according to any one of Claims 1 to 6, wherein the compound is an unsaturated carbonyl compound.

8. The heat tolerance-inducing agent according to any one of Claims 1 to 6, wherein the compound is 2-hexenal.

9. A method for inducing heat tolerance of plants, the method comprising applying the heat tolerance-inducing agent according to any one of Claims 1 to 8 to a plant.
